# EUROPEAN PATENT APPLICATION

(11) **EP 3 312 824 A1**
(43) Date of publication of application: **25.04.2018**
(21) Application number: 16002257.0
(22) Date of filing: 21.10.2016
(51) Int. Cl.: G09B 5/06, G09B 19/00

(54) **COLLABORATION BETWEEN A ROBOT AND A HOLOGRAM**

(71) Applicant: Murdjeva, Yuliana Ivanova, 9300 Dobrich (BG); Murdjeva, Nicoletta Atanasova, 9300 Dorich (BG)
(72) Inventor: Murdjeva, Yuliana Ivanova, 9300 Dobrich (BG); Murdjeva, Nicoletta Atanasova, 9300 Dorich (BG)

(57) **Abstract**

This invention is a collaboration between a robot and a hologram and it is designed for people with autism, Down syndrome and others and similar conditions and problems. The role of this collaboration between the robot and the hologram is to overcome the fear of new, to reduce or eliminate completely the resistance to change, to predispose participants to relaxation, to lower stress and tension, to provoke desire for participation, to improve physical and speech abilities, to overcome self-isolation and to integrate in society. The collaboration between the robot and the hologram is applied in the following therapies: hippo therapy, canistherapy, feline therapy, therapy with water, laughter therapy, ergotherapy, hyperbaric oxygen therapy (hyperbaric chamber), sand therapy, honey therapy, music therapy, therapy with drums, art therapy, classes in an orchard, vegetable garden, herb garden, floriculture, cookery, confectionery, making pottery and other therapies appropriate for this type of people.

## Description

### TECHNICAL FIELD

The present invention relates to a collaboration between a robot and a hologram and it is designed for people with autism, Down syndrome and others and similar conditions and problems. The collaboration improves the physical and vocal abilities of the participants, stimulates their desires for socialization and integration into society and helps to acquire useful skills. It is applied in the following therapies: hippo therapy, canistherapy, feline therapy, therapy with water, laughter therapy, ergotherapy, hyperbaric oxygen therapy (hyperbaric chamber), sand therapy, honey therapy, music therapy, therapy with drums, art therapy, classes in an orchard, vegetable garden, herb garden, floriculture, cookery, confectionery, making pottery and other therapies appropriate for this type of people. The robot is programmed for each separate therapy. The hologram is created with the image of the actual participant and it is also programmed for each therapy. The robot and the hologram are synchronized for a join action and implementation of the given task. Subsequently, the task is repeated the task together with the participant.

### BACKROUND OF INVENTION

The philosophy of success is a person alone to wish something, to make its own choice and to show personal will. The condition of people with special needs is not a sentence but a path to the best realization of their abilities. The collaboration between a robot and a hologram, created for them and applied in different therapies, is the only possible way for them to see themselves, to believe in themselves, in their capabilities and achieve the desired results.

The collaboration reduces or completely eliminates the resistance to a particular change (new action, therapy) as the participants have the opportunity to prepare in advance watching the actions of the robot and the hologram.

The time factor is always important. A person can accept something new immediately, for one month, for one year. This time is drastically shortened through the collaboration between the robot and the hologram as the participants already see themself doing it.

The purpose of this invention, designed for people with special needs- autism, Down syndrome and others and similar conditions and problems, is these people to overcome self-isolation, fear, phobias and to help their integration and social development. It helps them achieve better physical condition, express feelings and acquire appropriate, adequate and effective response. The people with special needs are isolated and distant from society. The nature of these diseases shows that in most cases people with this type of problems are afraid of direct contact with a stranger. Therefore, at the first stage of the program the presence of unknown people is minimized. This function is delegated to a robot.

The robot is considered as toy and entertainment. It does not cause any concern. The actions of the robot are easy, attract interest and can be emulated. Its commands are short, accurate and clear.

The hologram represents a mirror image of the participant in the program. This image is so believable that it causes surprise, interest and desire to even be touched. The hologram gives the participant an opportunity to see itself from aside. It is the missing link between the participant in the program and its actual capabilities. The hologram image shows the person how to execute each command. The participant sees its capability to perform a given task with confidence, self-confidence and ease. In each therapy, the hologram illustrates the set commands and their proper implementation.

### ESSENCE OF THE COLLBORATION BETWEEN A ROBOT AND A HOLOGRAM

Initially, the collaboration between a robot and a hologram shows the participant something unusual, causing surprise and interest. It attracts attention, can be likened as a game and helps concentration. The purpose of the collaboration is to provoke desire to participate and to make participants empathetic to the action.

The needs for useful skills are established individually for each participant. Individual programs with specific approach and strategy training are prepared for each therapy.

Steps of implementation/ action sequence:
(a) Monologue of the robot for greeting the hologram and the participant
(b) Dialogue between the robot and the hologram to perform a task
(c) The robot demonstrates the implementation of the task
(d) Dialogue between the robot and the hologram for join implementation of the given task
(e) The robot is synchronized with the hologram and perform the task together
(f) The robot and the hologram in dialogue with the participant
(g) Synchronization between the robot and the hologram to perform the task together with the participant
(h) Dialogue of the robot and the hologram with the participant after the implementation of the task
   (h.1) Greetings to the participant for successfully implementing the task or
   (h.2) Greetings to the participant for taking part and observe the task
(i) Subsequent join repetitions of the implementation of the task by the robot, hologram and the participant
(j) Dialogue between the robot, the hologram and the participant for thankfulness of the join work and belief in his abilities to do well alone.
(k) The robot formally gives a symbolical reward to the participant

An assessment on the outcome of the participant's condition before and after is made after the therapy. Expectations and results are analyzed.

There is a separate algorithm of tasks and actions for each type of therapy that must be implemented initially by the robot, the hologram and the participant and subsequently only by the participant.

The next innovative step is the same therapies, acquired already individually, to be performed in groups for the purpose of socialization. The activities of the participants are all day and include combination of several different therapies conducted for a certain period. These groups are from more than seven participants, each of whom has a personal assistant who intervenes only when necessary. Performing each of the therapies together, the participants concentrate not only on themselves but observe the rest of the group. In the group therapies the emphasis is on socialization. The sharing of common action leads to a sense of community, collectivism and awakens the interest on others.

The next innovation is in the hyperbaric oxygen therapy with capacity of participants - 32 people. Due to the specifics of this therapy, namely the length of staying one hour in closed space, to distract the participants is applied and used HD or 3D cinema. This combination between hyperbaric chamber and cinema gives the participants the opportunity to go through this therapy unnoticeably. The term "BARO CINEMA" is introduced. Only in this therapy the attendance of personal assistants or parents is mandatory and the use of robots and holograms is allowed for soothing and mood of the participants.

An evaluation of each participant is made after completion of each group therapy:
(a) Level and degree of implementation of the tasks
(b) Degree of socialization
The results are analyzed and the follow-up program is prepared accordingly.

The collaboration between robot and hologram stimulates physical development and speech abilities of the participant, without are restrictions. The purpose is the participant to go through the whole course of all types of therapies to achieve maximum and lasting effect.

### SHORT DESCRIPTION OF THE DRAWINGS

FIG. 1 shows a person with a computer behind a wall, who cannot be seen, a participant who observes a robot and a horse and a hologram and a horse
FIG. 2 shows a person with a computer behind a wall, who cannot be seen, a participant who observes a robot with a drum and a hologram with a drum
FIG. 3 shows a person with a computer behind a wall, who cannot be seen, a participant who observes a robot and a dog and a hologram and a dog
FIG. 4 shows a person with a computer behind a wall, who cannot be seen, a participant who observes a robot with a palette, brush and a painting tripod and a hologram with a palette, brush and painting tripod
FIG. 5 shows a person with a computer behind a wall, who cannot be seen, a participant who observes a robot and cats and a hologram and cats
FIG. 6 shows a person with a computer behind a wall, who cannot be seen, a participant who observes a robot and a mirror and a hologram and a mirror
FIG. 7 shows a person with a computer behind a wall, who cannot be seen, a participant who observes a robot watering flowers and a hologram watering flowers
FIG. 8 shows a person with a computer behind a wall, who cannot be seen, a participant who observes a robot cooking and a hologram cooking
FIG. 9 shows a person with a computer behind a wall, who cannot be seen, a participant who observes a robot planting a tree and a hologram planting a tree
FIG. 10 shows a person with a computer behind a wall, who cannot be seen, a participant who observes a robot showing how the hologram swims
FIG. 11 shows a person with a computer behind a wall, who cannot be seen, a participant who observes a robot showing how the hologram exercises
FIG. 12 shows a person with a computer behind a wall, who cannot be seen, a participant who observes a robot making pottery and a hologram making pottery
FIG. 13 shows hyperbaric chamber, robot and participants with glasses

### BRIEF DESCRIPTION OF THE DRAWINGS

The essence and the advantages of the present invention may be realized by detailed reference to the drawings. All the attached drawings illustrate the first stage of the work with the participants when they are alone with the robot and the hologram with the exception of the last.

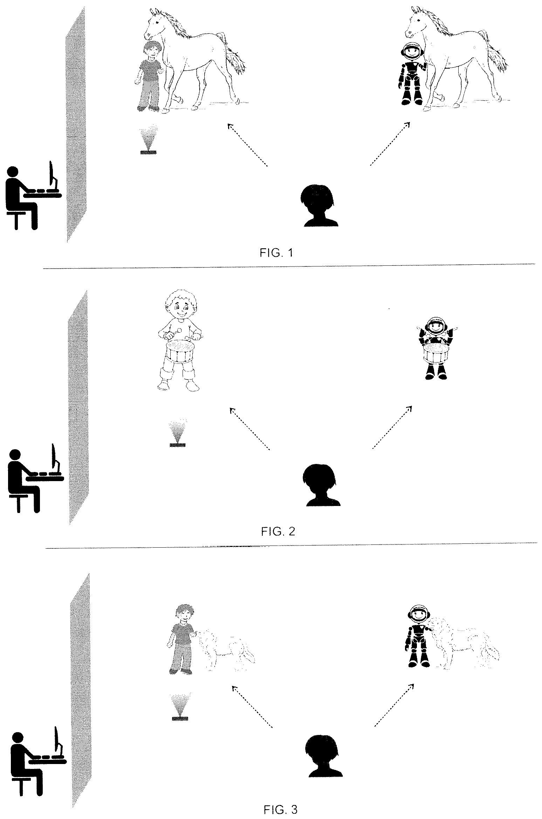

In FIG.1, FIG. 3 and FIG. 5 the collaboration between a robot and a hologram aims acceptance of the given animal at the first stage. The participants may have never seen life horse or may have never had a dog or a cat. Overcoming fear is most important to accept the animals. The people with special needs see that the robot and the hologram communicate and have physical contact with the animals. This helps the participants to see the animals as an object that will not hurt nor harm them. There is an emerging interest and attraction. The collaboration between the robot and the hologram here develops a sense of sympathy, affection and takes notice of the contact with the animals by petting and receiving their sincerity and love. It creates a sense of responsibility through feeding and grooming. All this is done clearly through fun and game.

FIG. 2 - rhythm therapy (therapy with drums). The creation of music and rhythm is incredibly powerful remedy. The rhythm brings people back to the primary. A preparation for the rhythm therapy is performed through the collaboration between the robot and the hologram. Participants are introduced to a drum. In the form of entertainment and game they begin to beat the drum together with the robot and the hologram. Gradually the pace, membrane and dynamics are changed. A rhythm cocktail is made. The main purpose is preparation for the actual rhythm therapy and transformation of mental snapshot of the participants. Through the collaboration is achieved changing in emotional attitude, reducing stress, fatigue, aggression, depression and negative emotions and condition become positive.

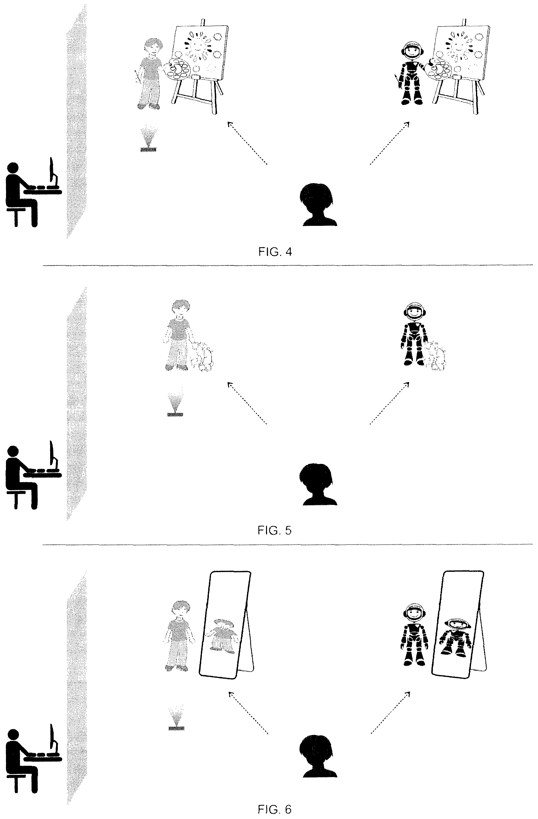

FIG. 4 - art therapy. Painting is the key to the world of the participant and it says a lot about his emotional state. The theme of the painting, the size, the colors, the shapes and even power of the pressure of the brush or pencil are important. Drawing shows much more than hundreds words according to most of the experts. In the first stage through the collaboration between the robot and the hologram a desire and creativity impulse of the participant for drawing is provoked, creating opportunity to express the inner world, to realize its feelings and desires. It offers him a way of communication and expression without words.

FIG. 6 - laughter therapy. Each participant is unique. Psychologists produce individual collaboration between the robot and the hologram depending the condition of the person. It has extremely important role in the first stage of the training - preparation for laughter. Conditions, in which the participant relaxes and begins to laugh, are created.. Laughter is found and the enjoyment from it. At this stage the blockages that stop laughter are taken out. The laughter therapy is practiced at the second stage in a group, combined with exercises and relaxation exercises. Leading values in the life of the participant are affirmed - laughter, positivity and love.

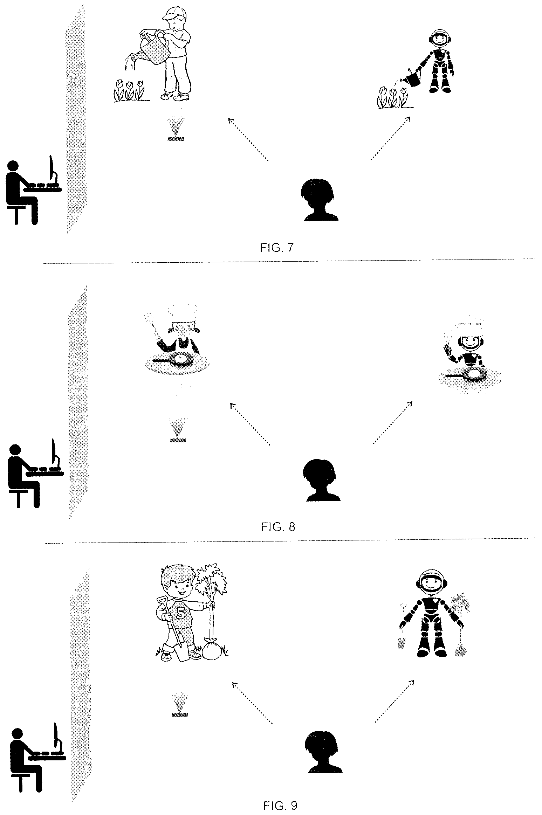

In FIG. 7 - floriculture, FIG. 9 - fruit-growing, gardening, herb-growing, vegetable-growing promote physical activity that is beneficial for the health of the participants. With the collaboration between the robot and the hologram the participants are helped to learn more about the environment and the responsibility for it in the form of game. The collaboration teaches them to love the nature, flowers and plants and to identify food that is good for them. In the first stage of the therapy, it teaches the participants physical contact and acceptance of fruits, vegetables, small trees and garden accessories. It creates a sense of confidence and belief in their own abilities. The actual acts are carried out in the second stage in group therapies.

FIG. 8 - cookery and confectionery. In the first stage of these therapies the collaboration between the robot and the hologram introduces the participants to cookery and confectionery. It explains where they are performed and what tools are used. It gives the participants an opportunity to hold, examine and exchange the tools. It shows them how to develop safely handling of the equipment in the form of game. The preparation for cookery and confectionery is started and the collaboration stimulates the use of elementary skills of counting and following a specific sequence. The actual acts are carried out in the second stage in group therapies.

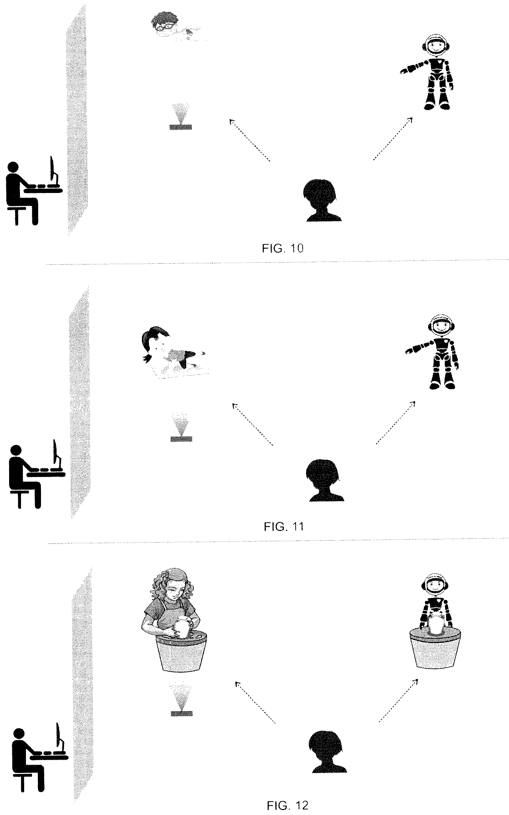

FIG.10 and FIG. 11 - water therapy and ergotherapy. Due to the specifics of these two therapies and the inability of the robot to illustrate the tasks, here the hologram alone performs the commands given by the robot. Through the collaboration between the robot and the hologram is achieved recreational activity and the attention of the participants is attracted. Subsequently the hologram uses additional tools (ball, surfing board, rope and others) to attract the participants to join it and to perform the given tasks together for the purpose of strengthen the physical body, improve mental condition, calm and fun.

FIG. 12 - therapy with pottery and ceramics. The use the collaboration between the robot and the hologram in the first stage of the therapy with pottery and ceramics aims to overcome the fear of new unknown skills through contact with clay. The creation of something completely unique with unpredicted appearance is seen. The participants are encouraged to participate because this therapy is important and includes senses - touch, sight, hearing, smell. It teaches patience because the result in not visible immediately, creativity - all have different understanding about proportion and shape and joy and satisfaction of receiving something real, that can be hold. It aims to build life skills and encourage self-expression without words.

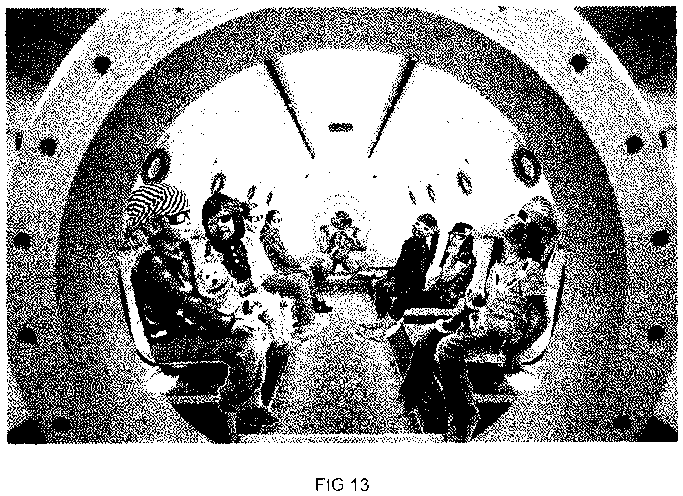

FIG. 13 - hyperbaric chamber. Due to the specific of this therapy, namely length of staying in closed space for one hour the collaboration between the robot and the hologram is applied jointly with HD or 3D cinema. Their use is intended to attract the attention, comfort and entertainment during the whole period of staying in the hyperbaric chamber.

## Claims

1. Collaboration between a robot and a hologram comprising: a robot, a hologram and computer programs for synchronization between them and synchronization between them and the participant depending on the activity that is performed.

2. The invention of claim 1 for people with special needs is applied in the following therapies: therapies with animals- hippo therapy, canistherapy, feline therapy and other animals.

3. The invention of claim 1 for people with special needs is applied in the following therapies: sand therapy, honey therapy and art therapy.

4. The invention of claim 1 for people with special needs is applied in the following therapy: hyperbaric oxygen therapy (hyperbaric chamber).

5. The invention of claim 1 for people with special needs is applied in the following therapies: therapy with water and ergotherapy.

6. The invention of claim 1 for people with special needs is applied in the following therapies: music therapy, therapy with drums and laughter therapy.

7. The invention of claim 1 for people with special needs is applied in the following therapies: education in an orchard, vegetable garden, herb garden and floriculture.

8. The invention of claim 1 for people with special needs is applied in the following classes: cookery, confectionery, making pottery and ceramics.

9. The invention of claim 1 is applied for general use for children in medicine and dentistry for tests - from the most basic tests to the highly specialized.

10. The invention of claim 1 is applied for general use for children in medicine and dentistry for preparation and aid for conservative treatment.

11. The invention of claim 1 is applied for general use for children in medicine and dentistry for preparation and aid for surgical treatement.

12. The invention of claim 1 is applied for general use for children in medicine and dentistry for preparation and aid for the rehabilitation period.

13. The invention of claim 1 is applied for general use for education in kindergarten.

14. The invention of claim 1 is applied for general use for education in general educational and specialized schools.

## Amended claims

### Amended claims in accordance with Rule 137(2) EPC.

1. Collaboration between hologram and robot comprises of:
• separate, programmable hologram:
- With full physical identification of the participant (face, height - proportion in real size, posture) manner of behavior, peculiarities; or
- With another pre-selected image when needed;
• separate, programmable, humanoid, sensitized robot identifying with a small child:
- expressing emotions; and
- differentiating, recognizing human emotions;
• a computer with dedicated software for managing and synchronizing:
- collaboration between a hologram and a robot; and
- collaboration between a hologram and a robot and a participant;
• interaction between:
- the individual elements of the collaboration; and
- collaboration and the participant, depending on his / her physical, mental and emotional condition, includes:
- hologram and robot - monologs, dialogs;
- hologram and participant - monologs, dialogs;
- hologram, robot and participant - monologs, dialogs;
- hologram, participant and robot - monologs, dialogs;
- robot and hologram - monologs, dialogs;
- robot and participant - monologs, dialogs;
- robot, hologram and participant - monologs, dialogs;
- robot, participant, hologram - monologs, dialogs;
- participant and hologram - monologs, dialogs;
- participant and robot - monologs, dialogs;
- participant, hologram and robot - monologs, dialogs;
- participant, robot and hologram - monologs, dialogs;
- hologram and robot - showing and perform certain physical actions individually and jointly;
- hologram and participant - showing and perform certain physical actions individually and jointly;
- hologram, robot and participant - showing and perform certain physical actions individually and jointly;
- hologram, participant and robot showing and perform certain physical actions individually and jointly;
- robot and hologram showing and perform certain physical actions individually and jointly;
- robot and participant - showing and perform certain physical actions individually and jointly;
- robot, hologram and participant - showing and perform certain physical actions individually and jointly;
- robot, participant, hologram - showing and perform certain physical actions individually and jointly;
- participant and hologram showing and perform certain physical actions individually and jointly;
- participant and robot - showing and perform certain physical actions individually and jointly;
- participant, hologram and robot - showing and perform certain physical actions individually and jointly;
- participant, robot and hologram - showing and perform certain physical actions individually and jointly;

2. The invention from claim 1, included in therapies with animals, **characterized in** with verbal communication, touch, action, fun games, explanation and visual display, accepting the animal and preparing the participant for the therapy.

3. The invention from claim 1, included in art therapy and sand therapy, **characterized in that** that by verbal communication, clarification of shapes, colors, types of painting, means of drawing, introduction of concepts for painting and explanation and implementation of drawing techniques on paper, sand and various surfaces.

4. The invention from claim 1, included in hyperbaric chamber therapy, **characterized in that** that attracts attention and keeps participants in the confined space through dialogue, fun games and cinema.

5. The invention from claim 1, included in water therapy and ergo therapy, **characterized in that** explaining and showing actions and exercises to improve the physical condition of the participant and helping to perform therapies.

6. The invention from claim 1, included in music therapy and therapy with drums, wherein changing typical rhythm techniques, increasing and decreasing rhythm and changing the volume.

7. The invention from claim 1 included in laughter therapy, wherein the hologram constantly changes the appearance, dimensions of the body, and parts of it to cause robot to comment and laughter in the hologram-robot-participant configuration.

8. The invention from claim 1, included in floriculture, fruit-growing, gardening, herb-growing, **characterized in that** explains and shows various physical activities in relation to care for the plants, fruits, vegetables, herbs and flowers, the benefits of them and the way of use.

9. The invention from claim 1, included in bread making, cookery and confectionery, **characterized in that** explains types of food, familiarizes with utensils and appliances for food preparation and how to work with them, diet, volume and type of products, food preparation techniques and specific explanations for safety.

10. The invention from claim 1, included in activities with pottery and ceramics, **characterized in that** accepts to touch a foreign body, meaning clay, and forms a form.

11. The invention from claim 1, included in the field of medicine, **characterized in that** explains, prepares and demonstrates to the participant how to act in examinations, manipulations and procedures on highly qualified medical equipment.

12. The invention from claim 1, included in the field of dentistry, **characterized in that** explains, prepares and demonstrates to the participant how to act in examinations, manipulations and procedures on highly qualified dental equipment.

13. The invention from claim 1, included in the field of education, **characterized in that** that it represents an elementary model for presenting information in an accessible language in order to better memorize and perception.
